# EUROPEAN PATENT SPECIFICATION

(11) **EP 1 204 947 B1**
(45) Date of publication and mention of the grant of the patent: **04.02.2004**
(21) Application number: 99973942.8
(22) Date of filing: 01.10.1999
(51) Int. Cl.: G06K 9/00

(54) **RECHARGEABLE MOBILE HAND-HELD FINGERPRINT SCANNER WITH A DATA AND POWER COMMUNICATION INTERFACE**
WIEDERAUFLADBARER MOBILER TRAGBARER FINGERABDRUCKABTASTER MIT EINER DATEN- UND STROMÜBERTRAGUNGSSCHNITTSTELLE
NUMERISEUR D'EMPREINTES DIGITALES RECHARGEABLE MOBILE MANUEL A INTERFACE DE TRANSMISSION DE DONNEES ET D'ALIMENTATION

(30) Priority: 25.06.1999 US 140754 P
(43) Date of publication of application: 15.05.2002
(73) Proprietor: Cross Match Technologies, Inc., Palm Beach Gardens, FL 33410 (US)
(72) Inventor: MCCLURG, George, W., Jensen Beach, FL 34957 (US); BRUNELL, David, West Palm Beach, FL 33405 (US); SCOTT, Walter, G., North Palm Beach, FL 33408 (US)
(74) Representative: Cross, James Peter Archibald
(86) International application number: PCT/US1999/022709
(87) International publication number: WO 2001/001330

(56) References cited:
- GB-A- 2 313 441
- PATENT ABSTRACTS OF JAPAN vol. 1998, no. 14, 31 December 1998 (1998-12-31) & JP 10 262071 A (FUJI PHOTO FILM CO LTD), 29 September 1998 (1998-09-29)
- SLUIJS F ET AL: "An on-chip USB-powered three-phase up/down DC/DC converter in a standard 3.3 V CMOS process" 2000 IEEE INTERNATIONAL SOLID-STATE CIRCUITS CONFERENCE. DIGEST OF TECHNICAL PAPERS (CAT. NO.00CH37056), 2000 IEEE INTERNATIONAL SOLID-STATE CIRCUITS CONFERENCE. DIGEST OF TECHNICAL PAPERS, SAN FRANCISCO, CA, USA, 7-9 FEB. 2000, pages 440-441, XP000923437 2000, Piscataway, NJ, USA, IEEE, USA ISBN: 0-7803-5853-8
- PATENT ABSTRACTS OF JAPAN vol. 1999, no. 14, 22 December 1999 (1999-12-22) & JP 11 252489 A (MINOLTA CO LTD), 17 September 1999 (1999-09-17)

## Description

### Background of the Invention

### 1. Field of the Invention

The present invention relates generally to fingerprint scanning and imaging.

### 2. Related Art

Biometrics are a group of technologies that provide a high level of security. Fingerprint capture and recognition is an important biometric technology. Law enforcement, banking, voting, and other industries increasingly rely upon fingerprints as a biometric to recognize or verify identity. See, *Biometrics Explained*, v. 2.0, G. Roethenbaugh, International Computer Society Assn. Carlisle, PA 1998, pages 1-34.

Fingerprint scanners are available which capture an image of a fingerprint. A signal representative of the captured image is then sent over a data communication interface to a host computer for further processing. For example, the host can perform one-to-one or one-to-many fingerprint matching.

However, such fingerprint scanners are typically attached or tethered to a computer. These fingerprint scanners can rely upon power from a separate plug or through a Universal Serial Bus (USB) interface. See, e.g., fingerprint scanners made by Digital Persona, Veridicom, and SecuGen.

GB-A-2 343 441 solves the problem of limited battery life of mobile scanners by attempting to use as little light (power consumption) as possible. Only if a scan is unsatisfactory, the light intensity is increased.

The abstract of JP-A-10-262 071 discloses connecting a battery charging device to an IEEE 1394 cable.

Mobile use is increasingly desired in biometric applications, such as law enforcement. Police and other users need a portable, hand-held device to easily capture fingerprint images in the field. The portable hand-held device must be powered reliably. Conventional fingerprint scanners tethered to a personal computer cannot meet this need.

### Summary of the Invention

The present invention provides in one aspect a mobile, hand-held fingerprint scanner according to claim 1. The present invention provides in another aspect, a method according to claim 9. A separate plug for power is not needed. The fingerprint scanner can then be inserted quickly and easily in a docking station as only a single data and power communication interface need be coupled. This is particularly advantageous in law enforcement applications where mobile use is important and safety can be compromised if a mobile scanner does not couple to a docking station quickly and easily.

In one embodiment, the mobile, hand-held fingerprint scanner includes a rechargeable power supply and a data and power communication interface. The rechargeable power supply powers the fingerprint scanner during mobile use. In one example implementation, the rechargeable power supply includes at least one rechargeable battery, a charging circuit, and a voltage regulator circuit. The charging circuit regulates the charging (*i*.*e*. the rate) of a rechargeable battery when the fingerprint scanner is receiving power through the data and power communication interface. The voltage regulator circuit maintains a substantially constant output system voltage from the rechargeable battery during mobile use. Further, in one preferred example, the data and power communication interface is a universal serial bus (USB). The data and power interface of the present invention is not limited to USB. In general, any data communication interface that provides for power in its protocol may be used, such as, an IEEE 1394 interface.

Further features and advantages of the present invention, as well as the structure and operation of various embodiments of the present invention, are described in detail below with reference to the accompanying drawings.

### Brief Description of the Drawings

The accompanying drawings, which are incorporated herein and form part of the specification, illustrate the present invention and, together with the description, further serve to explain the principles of the invention and to enable a person skilled in the pertinent art to make and use the invention.

FIG. 1 is a diagram of amobile, hand-held fingerprint scanner and docking system according to one embodiment of the present invention.

FIG. 2 is a diagram of a mobile, hand-held fingerprint scanner according to one embodiment of the present invention.

FIGs. 3A and 3B are drawings of an example implementation of a mobile, hand-held fingerprint scanner used in a law enforcement application according to the present invention.

The present invention is described with reference to the accompanying drawings. In the drawings, like reference numbers indicate identical or functionally similar elements. Additionally, the left-most digit(s) of a reference number identifies the drawing in which the reference number first appears.

### Detailed Description of the Embodiments

According to the present invention, a mobile, hand-held fingerprint scanner is recharged by a data and power communication interface. The term "data and power interface" refers to any communication interface that transfers data and provides power. The data and power interface of the present invention can include, but is not limited to, Universal Serial Bus (USB) or IEEE 1394.

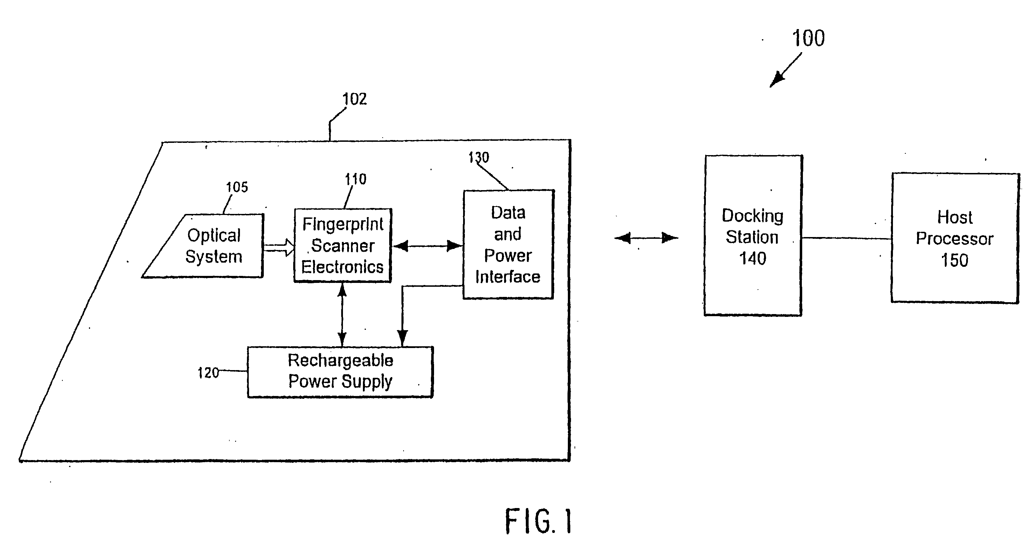

FIG. 1 shows a mobile, hand-held fingerprint scanner and docking system 100 according to one embodiment of the present invention. System 100 includes a mobile, hand-held fingerprint scanner 102, docking station 140 and a host processor 150. Fingerprint scanner 102 is a portable, hand-held scanner that detects and stores images representing part or all of a fingerprint. For convenience, the term "fingerprint image" is used herein to refer to any type of detected fingerprint including but not limited to an image of all or part of one or more fingerprints, a rolled fingerprint, a flat stationary fingerprint, a palm print, and/or prints of multiple fingers. Fingerprint scanner 102 is detachably coupled to docking station 140. Stored images are then downloaded from fingerprint scanner 102 through docking station 140 to a host processor 150.

In one embodiment, fingerprint scanner 102 includes an optical system 105. For example, optical system 105 can include a prism and a lens system, as described in U.S. Patent No. 5,900,993. Other optical systems can be used in the present invention as would be apparent to a person skilled in the art.

Optical system 105 outputs a fingerprint image to fingerprint scanner electronics 110. Fingerprint scanner electronics 110 detects the image and generates an electrical signal representative of the detected signal. The signal is then stored in a memory for subsequent download through data and power interface 130.

Rechargeable power supply 120 is coupled to fingerprint scanner electronics 110 (and electrical components, if any, in optical system 105) and data and power interface 130. Rechargeable power supply 120 provides power for the electronic components in fingerprint scanner 102, including fingerprint scanner electronics 110 and any electrical components in optical system 105, such as, a shutter, lens cover, or drive unit(s) for the lens system. Rechargeable power supply 120 is able to power the fingerprint scanner 102 when the scanner is in active, mobile use out of the docking station 140. According to a further feature, when the fingerprint scanner 102 is returned to docking station 140, power is provided through data and power interface 130 to recharge rechargeable power supply 120. No separate plug or power connection is needed. This is especially important in time-sensitive and safety critical applications, such as law enforcement. A police officer needs to be able to return fingerprint scanner 102 to docking station 140 in a simple and rapid fashion such that a connection is made quickly and reliably.

In one preferred example, data and power interface 130 is a universal serial bus (USB). A USB includes four pins (or channels). Two pins (+,-) carry a differential data signal, a third pin carries power, and a fourth pin is ground. The data and power interface of the present invention is not limited to USB. In general, any data communication interface that provides for power in its protocol may be used, such as, the IEEE 1394 High Performance Serial Bus (also called a FIREWIRE interface). See, e.g., Randall, "Solutions: Tutor, a Serial Bus on Speed," *PC Magazine* May 25, 1999, pp. 201-203.

Docking station 140 can hold fingerprint scanner 102 in a variety of configurations depending upon a particular application and environment. For example, in a law enforcement application, docking station 140 may be a holder mounted in a police car. Host processor 150 can be any type of computer, processor(s), or logic which can receive and process fingerprint images detected by the fingerprint scanner 102. In one example, host processor 150 includes software for performing one-to-one or one-to-many fingerprint matching and recognition.

In another example, host processor 150 transmits detected fingerprint data to another processor for matching and recognition. For instance, if host processor 150 is in a law enforcement vehicle, host processor 150 can transmit detected fingerprint data to another processor at a police station or FBI office with access to a larger database for matching and recognition over a broader range of data.

In a law enforcement application, host processor 150 can further assemble the detected images into a format compatible with a local, county, or state AFIS or the NCIC or NCIC 2000 service. National Crime Information Center (NCIC) is an on-line information service jointly maintained by the Federal Bureau of Investigation (FBI) and criminal justice agencies throughout the:United States and its territories. NCIC is being replaced by NCIC 2000, which will provide all NCIC services and new services. The new services include fingerprint matching, additional information files, and image files.

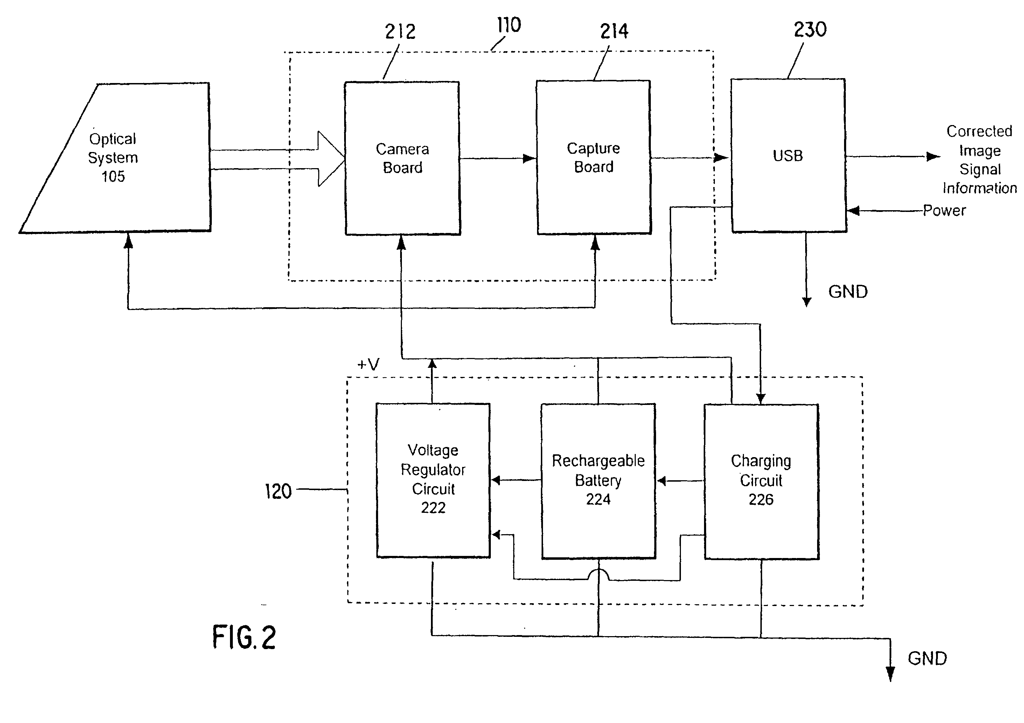

FIG. 2 is a diagram showing mobile, hand-held fingerprint scanner 102 in further detail according to one embodiment of the present invention. Fingerprint scanner electronics 110 includes a camera board 212 and a capture board 214. Camera board 212 includes a CMOS square pixel array. For example, a CMOS camera manufactured by Motorola Corporation can be used. Capture board 214 includes a memory for storing detected fingerprint images. Other circuitry and/or processing capability, such as, a frame grabber, analog/digital converter, and system controller can be provided as would be apparent to a person skilled in the art given this description. Such functionality can be provided all or in part, as desired, in the camera card 212, capture card 214, a stand-alone component, docking station 140 or host processor 150. In one example, image processing and finger print matching and recognition operations are carried out primarily in host processor 150. Processing operations related to detecting and storing a detected image signal are carried out in capture board 214.

Rechargeable power supply 120 includes voltage regulator circuit 222, at least one rechargeable battery 224, and charging circuit 226. Data and power interface 230 is a Universal Serial Bus (USB). Voltage regulator circuit 222 maintains a substantially constant output system voltage from rechargeable battery 224 during mobile use and while nested in docking station 140. In one preferred example, a relatively low system voltage of about 3 volts can be output to power a CMOS camera (compared to 12 volts for a charge-coupled-device (CCD) camera). Charging circuit 226 regulates the charging (i.e., the rate of charging) of a rechargeable battery 224 when fingerprint scanner 102 is receiving power through Universal Serial Bus 230. In one example, charging circuit 226 is connected to charge voltage regulator circuit 222 and rechargeable battery 224 with power from USB 230. Rechargeable battery 224 is coupled to voltage regulator circuit 222. Other configurations and arrangements can be used. Any known charging circuit and voltage regulator circuit can be used in accordance with this description as would be apparent to a person skilled in the art.

### Example Mobile Hand-Held Fingerprint Scanner

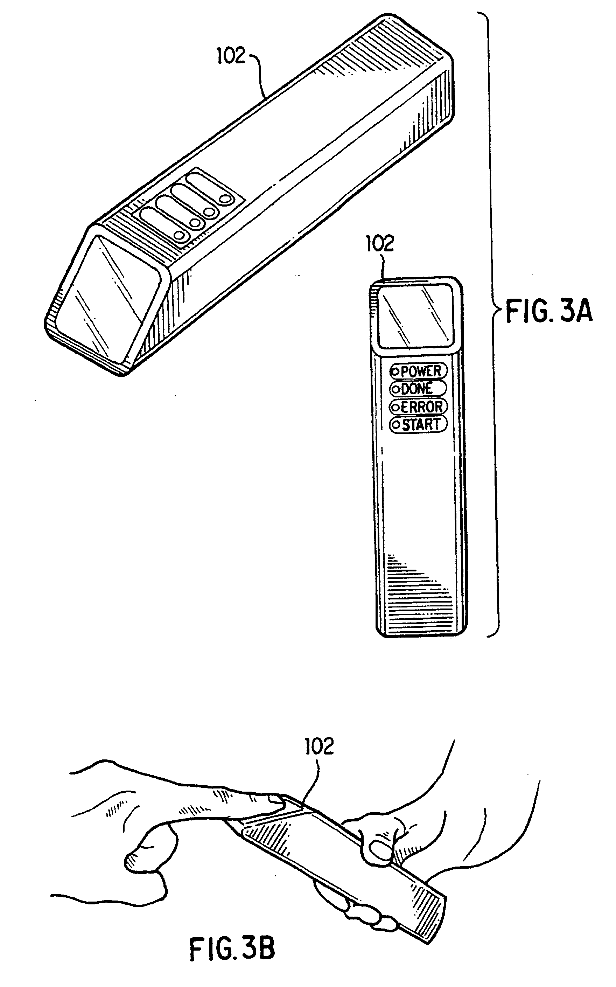

FIGs. 3A and 3B are drawings of an example implementation ofa mobile, hand-held fingerprint scanner (also called a live scan device) used in a law enforcement application. FIG. 3A shows two views (top view and a view from an angl e) of an example fingerprint scanner 102 according to the present invention. Fingerprint scanner 102 can be used with a FBI Mobile Imaging Unit (MIU) software application in host processor 150 to support NCIC 2000 functions in mobile law enforcement vehicles. The MIU provides a user interface, supports various peripheral devices, and transmits information in NCIC 2000-defined formats. The mobile fingerprint live scan device 102 can operate as a peripheral to the MIU (or to a processor that performs MIU-equivalent functions).

Fingerprint scanner 102 captures single (right or left index) fingerprint images in the environment of a law enforcement vehicle (see FIG. 3B). Fingerprint scanner 102 communicates the fingerprint images to a mobile host processor 150 in the vehicle. Fingerprint scanner 102 does not compromise officer safety when used by a single officer working with an unknown subject in a remote location. Hence, its small size, light weight, and mobility in the vicinity of the patrol car are vital to law enforcement. The ability to provide electrical power to fingerprint scanner 102 and support data transfer to the mobile host processor 150 without a tether is also highly desirable to law enforcement.

Further, fingerprint scanner 102 is sufficiently rugged for extended use in a mobile environment. The housing for fingerprint scanner 102 is a machined aluminum enclosure providing a rugged, durable device that can sustain the rigors of harsh temperature environments associated with portable/mobile use with mass handling.

Host processor 150 includes or is coupled through a wireless communication link to other system databases or services (such as NCIC 2000). A software interface which is TWAIN compliant is included for easy integration and Plug and Play (PnP) connectivity.

Fingerprint scanner 102 integrates optical system 105 and an internal processor in electronics 110 to make up a complete, self-contained unit. The optics provide forensic quality image capture that meets or exceeds most image matching requirements.

The hardware interface of the fingerprint scanner 102 utilizes an industry standard USB connection 230 in one example. USB interface 230 eliminates the need for costly digitizer boards; providing immediate return on investment.

Fingerprint scanner 102 is ergonomically designed to fit the hand naturally. The oblong, cylindrical shape (similar to a flashlight), does not contain sharp edges. The device is small enough to be gripped by large or small hands without awkward or unnatural movement. The device is comfortable to use without muscle strain on the operator or subject. In one example, fingerprint scanner 102 is 3.8 x 20 x 3.8 cm (1.5 x 8.0 x 1.5 inches) (height x length x width), weighs about 340 grams (12 oz.), and has an image platen size of about 2.5 x 2.5 cm (1" x 1").

Fingerprint scanner 102 has controls and status indicators on the front-face of the unit for single (left or right) hand operation. The non-intimidating appearance of the fingerprint scanner 102 is designed to resemble a typical flashlight - a device that is not generally threatening to the public. Fingerprint scanner 102 has no sharp edges and is constructed of a light-weight aluminum housing that is coated with a polymer to give the device a "rubberized" feel. Because fingerprint scanner 102 is small and lightweight, it may be carried on the officer's utility belt upon exiting a vehicle. The device is designed for one hand use, allowing the officer to have a free hand for protective actions. Fingerprint scanner 102 is designed for harsh environments to sustain issues such as dramatic temperature changes and non-intentional abuse.

Fingerprint scanner 102 exchanges data with the mobile host processor 150 via a docking station 140. The docking station 140 serves as a cradle that easily guides the fingerprint scanner 102 into position blindly, allowing the officer to focus on safety issues rather than the device operation. Docking station 140 is small and compact for easy placement in a tight space. Using a simple USB cable, the docking station 140 transmits data and charges the rechargeable battery 224 through a simple, single connection.

Fingerprint scanner 102 captures a single image and stores the captured image in any type of portable media (not shown). Such portable media for example can be memory integral to or coupled to receive output from camera board 212. Random-access memory (RAM) backed-up by rechargeable battery 224 is used in one embodiment ofthe present invention. Rechargeable battery 224 can be a Commercial Off The Shelf (COTS) Nickel Cadmium battery. The low-voltage battery (3.3 VDC) powers fingerprint scanner 102. Other types of memory (flash memory, non-volatile memory, floppy drives, disks, mini-floppy drives, etc.) can be used in alternative embodiments of the present invention.

In one embodiment of the present invention, a captured image of a fingerprint print is stored locally in memory in fingerprint scanner electronics 110. For example, the memory can store the print without having to transmit the print using expensive radio-frequency transmission. Captured images of prints can be stored in mini-floppy drives (such as the available from Sandisk Corp. or Intel Corp.). In this way, multiple prints can be stored locally. This is especially important in border control and accident sight markets. A crime scene can also be better documented as prints of all people present can be captured. Such captured prints can then be distinguished from other latent images which are uncovered.

Fingerprint scanner 102 can meet the most strict NIST (ANSI-NIST CSL 1998) image requirements.

Fingerprint scanner 102 contains a simple push button and set of 3 LED's that provide user activation and status indication. The user need only press one button to activate the unit. Once activated, the fingerprint scanner 102 awaits a finger to be introduced to the fingerprint capture platen. The digital image (or analog) is automatically captured when an adequate image area is detected. The image is then tested for quality of data prior to notifying the operator with an indication (e.g., visual indication and/or audible tone) for acceptance. The detected image is scalable to conform to FBI provided software (cropped or padded to 512 pixels by 512 pixels), although the standard image size is 2.5 x 2.5 cm (1" X 1"), 500 dpi, 256 levels of gray-scale (ANSI-NIST).

The digital fingerprint image output is stored in raw data format within memory (preferably a memory in fingerprint scanner 102). The raw data is then sent via the USB interface to host processor 150. Host processor 150 reformats the raw data into any desired or required image format. Scanner 102 can also store information that identifies the format of the raw data. Host processor 150 can then receive this information to determine what reformatting (e.g. cropping and/or padding), if any, is needed. For example, the raw data can be stored ins canner 102 in a 504 x 480 pixel image format. Host processor 150 can then reformat the 504 x 480 pixel format to a 512 x 512 image format or any other desired format.

In an example environment, fingerprint scanner 102 can meet the following criteria:
* A WINDOWS operating system environment and FBI-provided fingerprint image processing algorithms are used in NCIC 2000 fingerprint transactions;
* Fingerprint image sampling rate: 500 pixels per inch
* Size at input to FBI-provided Software: Cropped or padded to 512 pixels by 512 pixels
* Software interface from live scan device to MIU: TWAIN
* Image Quality: Electronic Fingerprint Transmission Specification, FBI Criminal Justice Information Services
   1) Appendix F, IAFIS Image Quality Specification Section 2 Fingerprint Scanners and
   2) Appendix G, Interim IAFIS Image Quality Specification for Scanners; MIU Processing: FBI-provided fingerprint image processing in mobile computer.

Fingerprint scanner 102 is held in either hand and used to capture a person's fingerprint. The fingerprint is captured from a cooperative individual (frontal approach) or an uncooperative individual (handcuffed subject - most commonly face down). Fingerprint scanner 102 can be operated with one-hand, allowing the officer to have a hand ready for protective actions. The officer need not have fingerprinting knowledge to capture the fingerprint.

The fingerprint capture process is simple as pressing a button and applying the subject's finger. The fingerprint is automatically captured and a quality check is performed immediately. The unit emits a tone to indicate a completed process. The officer may introduce the unit to the docking station blindly, maintaining his eyes on the subject for safety. Once seated in the docking station, the fingerprint is automatically transferred to the mobile computer without operator intervention. The unit's batteries are charged while within the docking station and ready for the next operation.

Thus, there is provided a mobile, hand-held fingerprint scanner that is recharged by a powered data communication interface. Data and recharging power is carried over the same interface. A separate plug for power is not needed. The fingerprint scanner can then be inserted quickly and easily in a docking station, as only a single data and power communication interface need be coupled. This is particularly advantageous in law enforcement applications where mobile use is important and safety can be compromised if a mobile scanner does not couple to a docking station quickly and easily.

### Conclusion

While various embodiments of the present invention have been described above, it should be understood that they have been presented by way of example only, and not limitation. It will be understood by those skilled in the art that various changes in form and details may be made therein without departing from the scope of the invention as defined in the appended claims. Thus, the scope of the present invention should not be limited by any of the above-described exemplary embodiments, but should be defined only in accordance with the following claims.

## Claims

1. A mobile, hand-held fingerprint scanner (102), comprising:
an interface charged rechargeable power supply (120) that powers the fingerprint scanner (102) during mobile use; and
a data and power communication interface (130) that couples data between the fingerprint scanner (102) and a docking station (140), and that provides power to charge said interface charged rechargeable power supply (120).

2. The mobile, hand-held fingerprint scanner (102) of claim 1, wherein said interface charged rechargeable power supply (120) includes at least one rechargeable battery (224).

3. The mobile, hand-held fingerprint scanner of claim 2, wherein said interface charged rechargeable power supply (120) includes a charging circuit (226) that regulates the charging of said at least one rechargeable battery (224) when the fingerprint scanner (102) is receiving power through the powered interface (130).

4. The mobile, hand-held fingerprint scanner of claim 3, wherein said charging circuit regulates the rate of charging of said at least one rechargeable battery.

5. The mobile, hand-held fingerprint scanner of any one of claims 2 to 4, wherein said interface charged rechargeable power supply (120) includes a voltage regulator circuit (222) that maintains a substantially constant output system voltage from the rechargeable battery (224) during mobile use.

6. The mobile, hand-held fingerprint scanner of any preceding claim, wherein said powered interface (130) comprises a universal serial bus (USB).

7. The mobile, hand-held fingerprint scanner of any preceding claim, wherein said powered interface (130) comprises an IEEE1394 compatible interface.

8. The mobile, hand-held fingerprint scanner of claim 2, 3 or 4, wherein said at least one rechargeable battery (224) comprises at least one nickel cadmium battery.

9. A method for charging a mobile fingerprint scanner (102) comprising the step of:
charging a rechargeable power supply (120) in the mobile fingerprint scanner (102) with power carried over a data and communication interface (130).

## Patentansprüche

1. Mobiler handgeführter Fingerabdruckscanner (102) mit:
einer über eine Schnittstelle wiederaufladbaren Stromversorgung (120), die den Fingerabdruckscanner (102) beim mobilen Gebrauch mit Strom versorgt, und
einer Daten- und Stromübertragungsschnittstelle (130), die Daten zwischen dem Fingerabdruckscanner (102) und einer Dockingstation (140) austauscht und Strom zum Aufladen der über die Schnittstelle wiederaufladbaren Stromversorgung (120) liefert.

2. Mobiler handgeführter Fingerabdruckscanner (102) nach Anspruch 1, wobei die über die Schnittstelle wiederaufladbare Stromversorgung (120) mindestens eine wiederaufladbare Batterie (224) enthält.

3. Mobiler handgeführter Fingerabdruckscanner nach Anspruch 2, wobei die über die Schnittstelle wiederaufladbare Stromversorgung (120) einen Ladeschaltkreis (226) enthält, der die Aufladung der mindestens einen wiederaufladbaren Batterie (224) regelt, wenn der Fingerabdruckscanner (102) Strom über die stromgespeiste Schnittstelle (130) bezieht.

4. Mobiler handgeführter Fingerabdruckscanner (102) nach Anspruch 3, wobei der Ladeschaltkreis die Aufladerate der mindestens einen wiederaufladbaren Batterie regelt.

5. Mobiler handgeführter Fingerabdruckscanner (102) nach einem der Ansprüche 2 bis 4, wobei die über die Schnittstelle wiederaufladbare Stromversorgung (120) eine Spannungsregelstufe (222) enthält, die beim mobilen Gebrauch eine im Wesentlichen konstante Systemspannung am Ausgang der wiederaufladbaren Batterie (224) aufrecht erhält.

6. Mobiler handgeführter Fingerabdruckscanner (102) nach einem der vorherigen Ansprüche, wobei die stromgespeiste Schnittstelle (130) eine USB-Schnittstelle aufweist.

7. Mobiler handgeführter Fingerabdruckscanner (102) nach einem der vorherigen Ansprüche, wobei die stromgespeiste Schnittstelle (130) eine IEEE-1394-kompatible Schnittstelle aufweist.

8. Mobiler handgeführter Fingerabdruckscanner (102) nach Anspruch 2, 3 oder 4, wobei die mindestens eine wiederaufladbare Batterie (224) mindestens eine Nickel-Cadmium-Batterie aufweist.

9. Verfahren zum Aufladen eines mobilen Fingerabdruckscanners (102), wobei eine wiederaufladbare Stromversorgung in dem mobilen Fingerabdruckscanner (102) mit über eine Daten- und Stromübertragungsschnittstelle (130) geführter Energie aufgeladen wird.

## Revendications

1. Scanner d'empreintes digitales à main et mobile (102), comprenant :
une alimentation électrique rechargeable (120) chargée par interface, qui alimente le scanner d'empreintes digitales (102) pendant l'utilisation mobile ; et
une interface de communication (130) de données et de courant qui couple les données entre le scanner d'empreintes digitales (102) et une station d'accueil (140), et qui fournit du courant pour charger ladite alimentation électrique rechargeable (120) chargée par interface.

2. Scanner d'empreintes digitales à main et mobile (102) selon la revendication 1, dans lequel ladite alimentation électrique rechargeable (120) chargée par interface comprend au moins une batterie rechargeable (224).

3. Scanner d'empreintes digitales à main et mobile selon la revendication 2, dans lequel ladite alimentation électrique rechargeable (120) chargée par interface comprend un circuit de charge (226) qui régule la charge de ladite au moins une batterie rechargeable (224) quand le scanner d'empreintes digitales (102) reçoit du courant via l'interface alimentée (130).

4. Scanner d'empreintes digitales à main et mobile selon la revendication 3, dans lequel ledit circuit de charge régule le régime de charge de ladite au moins une batterie rechargeable.

5. Scanner d'empreintes digitales à main et mobile selon l'une quelconque des revendications 2 à 4, dans lequel ladite alimentation électrique rechargeable (120) chargée par interface comprend un circuit régulateur de tension (222) qui maintient une tension de sortie du système sensiblement constante à partir de la batterie rechargeable (224) pendant l'utilisation mobile.

6. Scanner d'empreintes digitales à main et mobile selon l'une quelconque des revendications précédentes, dans lequel ladite interface alimentée (130) comprend un bus série universel (USB).

7. Scanner d'empreintes digitales à main et mobile selon l'une quelconque des revendications précédentes, dans lequel ladite interface alimentée (130) comprend une interface compatible avec la norme IEEE1394.

8. Scanner d'empreintes digitales à main et mobile selon la revendication 2, 3 ou 4, dans lequel ladite au moins une batterie rechargeable (224) comprend au moins une batterie au nickel cadmium.

9. Procédé pour charger un scanner d'empreintes digitales mobile (102) comprenant les étapes consistant à :
charger une alimentation électrique rechargeable (120) dans le scanner d'empreintes digitales mobile (102) avec du courant transporté via une interface de données et de communication (130).
